# EUROPEAN PATENT APPLICATION

(11) **EP 4 576 355 A1**
(43) Date of publication of application: **25.06.2025**
(21) Application number: 23916853.7
(22) Date of filing: 20.01.2023
(51) Int. Cl.: H01M 50/188, H01M 50/147, H01M 50/543, H01M 50/597

(54) **BATTERY CELL, BATTERY, AND ELECTRIC DEVICE**

(71) Applicant: Contemporary Amperex Technology (Hong Kong) Limited, Central (HK)
(72) Inventor: ZHOU, Jian, Ningde, Fujian 352100 (CN); ZHOU, Wenlin, Ningde, Fujian 352100 (CN); YANG, Kaihuan, Ningde, Fujian 352100 (CN); LI, Quankun, Ningde, Fujian 352100 (CN)
(74) Representative: Kraus & Lederer PartGmbB
(86) International application number: PCT/CN2023/073412
(87) International publication number: WO 2024/152375

(57) **Abstract**

Embodiments of the present application provide a battery cell, a battery, and an electrical apparatus. The battery cell comprises a housing, an electrode assembly, an electrode terminal, a fixing member, and a sealing member. The housing comprises a first wall, the first wall is provided with an electrode lead-out hole. The electrode assembly is accommodated in the housing. The electrode terminal is electrically connected to the electrode assembly and covers at least a portion of the electrode lead-out hole. The fixing member surrounds the electrode terminal and connects the electrode terminal and the first wall. The sealing member surrounds the electrode terminal, and at least a portion of the sealing member is sandwiched between the electrode terminal and the fixing member.

## Description

### TECHNICAL FIELD

The present application relates to the field of battery technology, and more specifically, to a battery cell, a battery, and an electrical apparatus.

### BACKGROUND

Battery cells are widely used in electronic devices, such as mobile phones, laptops, electric scooters, electric cars, electric airplanes, electric ships, electric toy cars, electric toy ships, electric toy planes, and electric tools.

In the development of battery technology, how to improve the reliability of battery cells is a research direction in the battery technology.

### SUMMARY

The present application provides a battery cell, a battery, and an electrical apparatus, which can improve reliability.

In a first aspect, an embodiment of the present application provides a battery cell, including a housing, an electrode assembly, an electrode terminal, a fixing member, and a sealing member. The housing includes a first wall, the first wall is provided with an electrode lead-out hole. The electrode assembly is accommodated in the housing. The electrode terminal is electrically connected to the electrode assembly and covers at least a portion of the electrode lead-out hole. The fixing member surrounds the electrode terminal and is used for connecting the electrode terminal and the first wall. The sealing member surrounds the electrode terminal, and at least a portion of the sealing member is sandwiched between the electrode terminal and the fixing member.

The fixing member is configured to connect the electrode terminal and the first wall, and at least a portion of the sealing member is sandwiched between the electrode terminal and the fixing member, so as to achieve sealing, reduce the force acting on the first wall, reduce the deformation of the housing, and improve the reliability of the battery cell.

In some embodiments, the electrode terminal includes a terminal body and a first flange protruding from an outer circumferential surface of the terminal body, and the sealing member surrounds the terminal body. In an axial direction of the electrode lead-out hole, at least a portion of the sealing member is sandwiched between the first flange and the fixing member.

By configuring the first flange, the electrode terminal and the fixing member can overlap in the axial direction of the electrode lead-out hole, so that the first flange and the fixing member can clamp the sealing member in the axial direction of the electrode lead-out hole. The way in which the first flange and the fixing member clamp the sealing member in the axial direction of the electrode lead-out hole is easy to implement and facilitates assembly.

In some embodiments, the electrode terminal further includes a second flange protruding from the outer circumferential surface of the terminal body. The first flange and the second flange are spaced apart in the axial direction, and at least a portion of the fixing member is located between the first flange and the second flange.

The first flange and the second flange can limit the fixing member from two sides of the fixing member, thereby achieving the connection between the fixing member and the electrode terminal. When the first flange and the fixing member compress the sealing member in the axial direction, the reaction force applied by the sealing member to the fixing member is substantially transmitted in the axial direction to the second flange. The reaction force produced by the sealing member is substantially transmitted to the first flange and the second flange, thereby reducing the force acting on the first wall, reducing the deformation of the housing, and improving the reliability of the battery cell.

In some embodiments, in the axial direction of the electrode lead-out hole, the second flange is located at the side of the first flange away from the electrode assembly.

The portion of the sealing member sandwiched between the first flange and the fixing member is located on an inner side of the second flange, which can reduce the risk of exposure of the sealing member and retard the aging of the sealing member.

In some embodiments, the battery cell further includes a first insulating member. In the axial direction of the electrode lead-out hole, at least a portion of the first insulating member is located between the second flange and the fixing member.

The first insulating member can insulate and isolate the second flange from the fixing member to reduce the risk of conductivity between the electrode terminal and the fixing member.

In some embodiments, the sealing member includes a sealing body and a first protrusion, the sealing body surrounds the terminal body, and the first protrusion protrudes from the surface of the sealing body facing the first flange. In the axial direction of the electrode lead-out hole, at least a portion of the sealing body is sandwiched between the first flange and the fixing member. At least a portion of the first flange is located between the first protrusion and the terminal body.

The portion of the sealing body sandwiched between the first flange and the fixing member can be compressed by force to achieve sealing between the electrode terminal and the fixing member. When the electrode terminal and the sealing member are assembled, the first protrusion can cooperate with the first flange to position the sealing member in a radial direction of the electrode terminal, thereby improving assembly efficiency and accuracy.

In some embodiments, the first flange is provided with a first recessed portion, and the first recessed portion is recessed relative to the surface of the first flange facing the sealing body. The first protrusion is accommodated in the first recessed portion.

The first recessed portion can provide avoidance space for the first protrusion, to reduce the risk of interference between the first protrusion and the first flange. In addition, by forming the first recessed portion, the first flange and the first protrusion can share space in the radial direction of the electrode terminal to improve space utilization.

In some embodiments, the sealing member includes a sealing body and a second protrusion, the sealing body surrounds the terminal body, and the second protrusion protrudes from the surface of the sealing body away from the first flange. In the axial direction of the electrode lead-out hole, at least a portion of the sealing body is sandwiched between the first flange and the fixing member. The second protrusion is disposed between the fixing member and the terminal body.

The portion of the sealing body sandwiched between the first flange and the fixing member can be compressed by force to achieve sealing between the electrode terminal and the fixing member. During assembly, the second protrusion can position the fixing member to improve assembly efficiency and accuracy.

In some embodiments, in the axial direction of the electrode lead-out hole, the projection of the first flange is located within the projection of the electrode lead-out hole.

In the axial direction, the first flange does not overlap the first wall, which can increase the creepage distance between the first flange and the first wall, improve the insulation between the first flange and the first wall, eliminate an insulation structure between the first flange and the first wall, reduce the overall weight, and increase energy density.

In some embodiments, in the axial direction of the electrode lead-out hole, the projection of the first flange at least partially overlaps the projection of the first wall. The battery cell further includes a second insulating member, the second insulating member is at least used for separating the first flange from the first wall.

The first wall can provide support for the first flange, which can increase the force bearing capacity of the electrode terminal in the axial direction, making the electrode terminal more stable. The second insulating member can separate the first flange from the first wall to reduce the risk of conductivity between the first flange and the first wall and improve insulation performance.

In some embodiments, the battery cell further includes a second insulating member, the second insulating member is at least used for separating the first flange from the fixing member.

The second insulating member can insulate and isolate the first flange from the fixing member to reduce the risk of conductivity between the electrode terminal and the fixing member.

In some embodiments, in the axial direction of the electrode lead-out hole, at least a portion of the second insulating member is disposed between the fixing member and the first flange.

The fixing member and the first flange can limit the second insulating member from two sides, thereby reducing the risk of detachment of the second insulating member and improving insulation performance.

In some embodiments, the electrode terminal has an end surface facing the electrode assembly, and the electrode terminal is provided with a second recessed portion recessed relative to the end surface and surrounding the end surface. The second recessed portion extends to an outer circumferential surface of the first flange in the radial direction of the electrode terminal. The portion of the second insulating member accommodated in the second recessed portion separates the first flange from the first wall.

By forming the second recessed portion, the second insulating member and the electrode terminal can share more space in the axial direction, the size of the electrode terminal protruding from the first wall can be reduced, and space utilization can be improved. In addition, by forming the second recessed portion, the distance between the electrode terminal and the first wall can be increased to reduce the risk of conductivity between the electrode terminal and the first wall.

In some embodiments, the inner diameter of the second recessed portion is less than that of the electrode lead-out hole.

Through the above technical solution, the end surface of the electrode terminal can have a relatively small size, thereby reducing the risk of overlap of the end surface with the first wall in the axial direction, and reducing the risk of conductivity between the end surface and the first wall.

In some embodiments, the first wall has a first surface facing the electrode assembly and a second surface away from the electrode assembly. In a direction facing the electrode assembly, the electrode terminal does not extend beyond the first surface.

The above technical solution can reduce the size of the electrode terminal extending into the interior of housing and reduce the internal space of the housing occupied by the electrode terminal, thereby reserving more space for an electrolyte to improve the cycle life and cycle performance of the battery cell.

In some embodiments, the first wall and the fixing member are separate ones.

Separating the first wall and the fixing member can simplify forming processes for the first wall and the fixing member, reduce the risk of interference of the first wall to the assembly of the fixing member with the electrode terminal, and reduce assembly difficulty.

In some embodiments, the first wall has a first surface facing the electrode assembly and a second surface away from the electrode assembly. The first wall is provided with a third recessed portion recessed relative to the second surface, and the electrode lead-out hole is disposed on a bottom surface of the third recessed portion. At least a portion of the fixing member is accommodated in the third recessed portion.

By forming the third recessed portion, the size of the fixing member protruding to the outer side of the first wall can be reduced, thereby reducing the external dimensions of the battery cell and increasing the energy density of the battery cell. The third recessed portion can further position the fixing member to simplify the process of connection between the fixing member and the first wall.

In some embodiments, the fixing member has a connecting surface, and the connecting surface abuts against the bottom surface of the third recessed portion in the axial direction of the electrode lead-out hole. The connecting surface is flush with the end surface of the electrode terminal facing the electrode assembly.

The connecting surface is flush with the end surface of the electrode terminal facing the electrode assembly, which can reduce the size of the electrode terminal extending into the electrode lead-out hole and reduce the internal space of the housing occupied by the electrode terminal.

In some embodiments, the fixing member is disposed at the side of the first wall away from the electrode assembly.

The fixing member is disposed at the side of the first wall away from the electrode assembly, which can reduce the internal space of the housing occupied by the fixing member.

In some embodiments, the fixing member includes a first connecting portion, a second connecting portion, and a bent portion; at least a portion of the electrode terminal is located at the side of the first connecting portion facing the electrode assembly and clamps the sealing member together with the first connecting portion. The bent portion surrounds the outer circumferential surface of the first connecting portion and bends towards the first wall; the second connecting portion surrounds the bent portion and is connected to the first wall.

By bending the fixing member, the distance between the electrode assembly and the first connecting portion can be increased, so that the sealing member and the electrode terminal can be disposed at the side of the first connecting portion facing the electrode assembly, thereby reducing the internal space of the housing occupied by the electrode terminal.

In some embodiments, the fixing member is formed integrally with the first wall.

Integrating the fixing member with the first wall can improve the strength of connection between the first wall and the fixing member and omitting the process for connecting the first wall with the fixing member.

In some embodiments, the housing includes a shell and an end cover, the shell has an opening, and the end cover fits on the opening. The end cover is the first wall.

The end cover can be of a plate-like structure, and components such as the electrode terminal and the fixing member are easily mounted to the end cover.

In some embodiments, in a plane parallel to the axial direction of the electrode lead-out hole, an orthographic projection of the electrode terminal covers an orthographic projection of the sealing member.

In the axial direction, the sealing member and the electrode terminal share partial space, which can reduce the size of the electrode terminal protruding to the outer side of the first wall, improve space utilization, and increase the energy density of the battery cell.

In a second aspect, an embodiment of the present application provides a battery, including a plurality of battery cells in any embodiment of the first aspect.

In a third aspect, an embodiment of the present application provides an electrical apparatus, including the battery cell in any embodiment of the first aspect, where the battery cell is used for providing electrical energy.

### BRIEF DESCRIPTION OF THE DRAWINGS

In order to explain the technical solutions of the embodiments of the present application more clearly, the drawings required for use in the embodiments of the present application will be briefly described below. Apparently, the drawings described below show only some embodiments of the present application. Those skilled in the art can derive other drawings based on the drawings without any creative effort.
FIG. 1 is a schematic structural view of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a cross-sectional view of the battery cell provided in some embodiments of the present application;
FIG. 5 is an enlarged view of FIG. 4 at box A;
FIG. 6 is a cross-sectional view of a terminal assembly of the battery cell provided in some embodiments of the present application;
FIG. 7 is an enlarged view of FIG. 6 at round box B;
FIG. 8 is a cross-sectional view of a battery cell provided in other embodiments of the present application;
FIG. 9 is an enlarged view of FIG. 8 at box C;
FIG. 10 is a cross-sectional view of a terminal assembly of the battery cell provided in other embodiments of the present application;
FIG. 11 is an enlarged view of FIG. 10 at round box D;
FIG. 12 is a cross-sectional view of a terminal assembly of a battery cell provided in some other embodiments of the present application;
FIG. 13 is a partial cross-sectional view of a battery cell provided in some other embodiments of the present application; and
FIG. 14 is a partial cross-sectional view of a battery cell provided in some more embodiments of the present application.

The drawings are not drawn to actual scale.

### DETAILED DESCRIPTION

To make the objectives, technical solutions and advantages of the embodiments of the present application clearer, the technical solutions in the embodiments of the present application will be described clearly below with reference to the drawings in the embodiments of the present application. Apparently, the described embodiments are some but not all of the embodiments of the present application. All other embodiments obtained by those skilled in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the drawings, and any variations thereof, are intended to cover non-exclusive inclusion. The terms "first", "second", and the like in the specification and claims of the present application or the drawings are used to distinguish different objects, rather than to describe specific sequences or primary and secondary relationships.

The "embodiment" mentioned in the present application means that specific features, structures or characteristics described in conjunction with the embodiments may be included in at least one embodiment of the present application. The phrase appearing at various places in the description does not necessarily refer to the same embodiment, or an independent or alternative embodiment exclusive of other embodiments.

In the description of the present application, it should be noted that, unless otherwise specified and defined, the terms "mounted", "connected", "connection", and "attached" should be understood in a broad sense. For example, the "connection" may be fixed connection, detachable connection, integral connection, direct connection, connection through a medium, or internal communication between two elements. Those skilled in the art can understand the specific meanings of the above terms in the present application according to specific situations.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application.

The battery mentioned in the embodiments of the present application may be a single physical module that includes one or more battery cells to provide higher voltage and capacity. When there is a plurality of battery cells, the battery cells are connected in series, in parallel, or in series and parallel by a busbar component.

In some embodiments, the battery may be a battery module. When there is a plurality of battery cells, the battery cells are arranged and fixed to form a battery module.

In some embodiments, the battery may be a battery pack, which includes a box and battery cells, where the battery cells or battery modules are accommodated in the box.

In some embodiments, the box may serve as a portion of a chassis structure of a vehicle. For example, a portion of the box may become at least a portion of a floor of the vehicle, or a portion of the box may become at least a portion of a crossbeam and a longitudinal beam of the vehicle.

In some embodiments, the battery may be an energy storage device. The energy storage device is an energy storage container, an energy storage cabinet, or the like.

The battery cell generally includes an electrode assembly. The electrode assembly includes a positive electrode, a negative electrode, and a separator. In the charging and discharging process of the battery cell, active ions (such as lithium ions) are repeatedly intercalated and deintercalated between the positive electrode and the negative electrode. The separator is disposed between the positive electrode and the negative electrode to prevent short-circuiting between the positive electrode and the negative electrode and allow active ions to pass through.

In some embodiments, the positive electrode may be a positive electrode plate, which may include a positive electrode current collector and a positive electrode active material disposed on at least one surface of the positive electrode current collector.

As an example, the positive electrode current collector has two opposite surfaces in its thickness direction, and the positive electrode active material is disposed on either or both of the two opposite surfaces of the positive electrode current collector.

As an example, the positive electrode current collector may be a metal foil or a composite current collector. For example, as a metal foil, silver surface treated aluminum or stainless steel, stainless steel, copper, aluminum, nickel, carbon electrodes, carbon, nickel, or titanium may be used. The composite current collector may include a polymer base layer and a metal layer. The composite current collector may be formed by depositing a metal material (aluminum, aluminum alloy, nickel, nickel alloy, titanium, titanium alloy, silver, silver alloy, etc.) on a polymer material substrate (such as a material substrate of polypropylene, polyethylene terephthalate, polybutylene terephthalate, polystyrene, polyethylene, etc.).

As an example, the positive electrode active material may include at least one of the following materials: lithium-containing phosphates, lithium transition metal oxides, and respective modified compounds. However, the present application is not limited to these materials, and other conventional materials that may be used as positive electrode active materials for batteries are available. These positive electrode active materials may be used alone, or in combination of two or more.

In some embodiments, the positive electrode may be made of foam metal. The foam metal may be foam nickel, foam copper, foam aluminum, foam alloy, or foam carbon. When the foam metal is used as the positive electrode, the positive electrode active material may be or may not be disposed on the surface of the foam metal. As an example, the foam metal may further be filled or/and deposited with a lithium source material, potassium metal or sodium metal, where the lithium source material is a lithium metal and/or lithium rich material.

In some embodiments, the negative electrode may be a negative electrode plate, which may include a negative electrode current collector.

As an example, the negative electrode current collector may be a metal foil or a composite current collector. For example, as a metal foil, silver surface treated aluminum or stainless steel, stainless steel, copper, aluminum, nickel, carbon electrodes, carbon, nickel, or titanium may be used. The composite current collector may include a polymer base layer and a metal layer. The composite current collector may be formed by depositing a metal material (copper, copper alloy, nickel, nickel alloy, titanium, titanium alloy, silver, silver alloy, etc.) on a polymer base material substrate (such as a material substrate of polypropylene, polyethylene terephthalate, polybutylene terephthalate, polystyrene, polyethylene, etc.).

As an example, the negative electrode plate may include a negative electrode current collector and a negative electrode active material disposed on at least one surface of the negative electrode current collector.

As an example, the negative electrode current collector has two opposite surfaces in its thickness direction, and the negative electrode active material is disposed on either or both of the two opposite surfaces of the negative electrode current collector.

As an example, the negative electrode active material may be the one commonly known in the art for battery cells. As an example, the negative electrode active material may include at least one of the following materials: artificial graphite, natural graphite, soft carbon, hard carbon, silicon-based materials, tin-based materials, and lithium titanate.

In some embodiments, the negative electrode may be made of foam metal. The foam metal may be foam nickel, foam copper, foam aluminum, foam alloy, or foam carbon. When the foam metal is used as the negative electrode plate, the negative electrode active material may be or may not be disposed on the surface of the foam metal.

As an example, the negative electrode current collector may further be filled or/and deposited with a lithium source material, potassium metal or sodium metal, where the lithium source material is a lithium metal and/or lithium rich material.

In some embodiments, the material of the positive electrode current collector may be aluminum, and the material of the negative electrode current collector may be copper.

In some implementations, the electrode assembly further includes a separator, which is disposed between the positive electrode and the negative electrode.

In some implementations, the separator is a separation film. The present application does not specially limit a type of the separation film. The separation film may be any known porous separation film with good chemical and mechanical stability.

For example, the main material of the separation film may be selected from at least one of glass fibers, a non-woven fabric, polyethylene, polypropylene, polyvinylidene fluoride, and ceramic.

In some implementations, the separator is a solid electrolyte. The solid electrolyte is disposed between the positive electrode and the negative electrode, and plays a role in transporting ions and isolating the positive electrode and the negative electrode.

In some implementations, the battery cell further includes an electrolyte, which plays a role in conducting ions between the positive electrode and the negative electrode. A type of the electrolyte is not specifically limited in the present application, and may be selected according to requirements. The electrolyte may be liquid, colloidal, or solid.

In some implementations, the electrode assembly is of a wound structure. The positive electrode plate and the negative electrode plate are wound into the wound structure.

In some implementations, the electrode assembly is of a stacked structure.

As an example, a plurality of positive electrode plates and a plurality of negative electrode plates may be alternately stacked.

As an example, a plurality of positive electrode plates may be disposed, the negative electrode plate is folded into a plurality of stacked folding segments, and one positive electrode plate is sandwiched between the adjacent folding segments.

As an example, both the positive electrode plate and the negative electrode plate are folded into a plurality of stacked folding segments.

As an example, a plurality of separators may be disposed between any adjacent positive or negative electrode plates.

As an example, the separator may be continuously disposed between any adjacent positive or negative electrode plates by folding or winding.

In some implementations, the electrode assembly may be cylindrical, flat, or polygonal.

In some implementations, the electrode assembly is provided with lugs, which can lead out electric current from the electrode assembly. The lugs include a positive lug and a negative lug.

The battery cell further includes a housing in which an accommodating cavity for accommodating the electrode assembly is formed. The housing may protect the electrode assembly from the outer side to prevent external foreign objects from affecting the charging or discharging of the electrode assembly.

The battery cell further includes an electrode terminal mounted on the housing, where the electrode terminal is electrically connected to the electrode assembly. The electrode terminal may be used for electrically connecting the electrode assembly with an external circuit to achieve the charging and discharging of the battery cell.

In related technologies, the housing is usually provided with an electrode lead-out hole, and the electrode terminal covers at least a portion of the electrode lead-out hole. By disposing the electrode lead-out hole, the electrode terminal can be electrically connected to the electrode assembly accommodated inside the housing.

In order to improve the reliability of the battery cell, a sealing member is usually disposed to seal the electrode lead-out hole, so as to reduce the risk of electrolyte leakage. In related technologies, the sealing member is usually sandwiched between the electrode terminal and the housing, and the electrode terminal and the housing seal the electrode lead-out hole by squeezing the sealing member.

However, the housing usually needs to directly squeeze the sealing member, so that the reaction force of the sealing member acting on the housing is relatively large. With the cycle use of the battery cell, the housing is prone to deformation, which may affect the reliability of the battery cell.

In view of this, an embodiment of the present application provides a technical solution, that is, a fixing member is configured to connect the electrode terminal and the housing, and at least a portion of the sealing member is sandwiched between the electrode terminal and the fixing member, so as to reduce the force acting on the housing, reduce the deformation of the housing, and improve the reliability of the battery cell.

The technical solution described in the embodiments of the present application is applicable to batteries and electrical apparatuses using the batteries.

The electrical apparatus may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The foregoing electrical apparatuses are not specially limited in the embodiments of the present application.

For convenient description, the electrical apparatus is a vehicle as an example for description in the following embodiments.

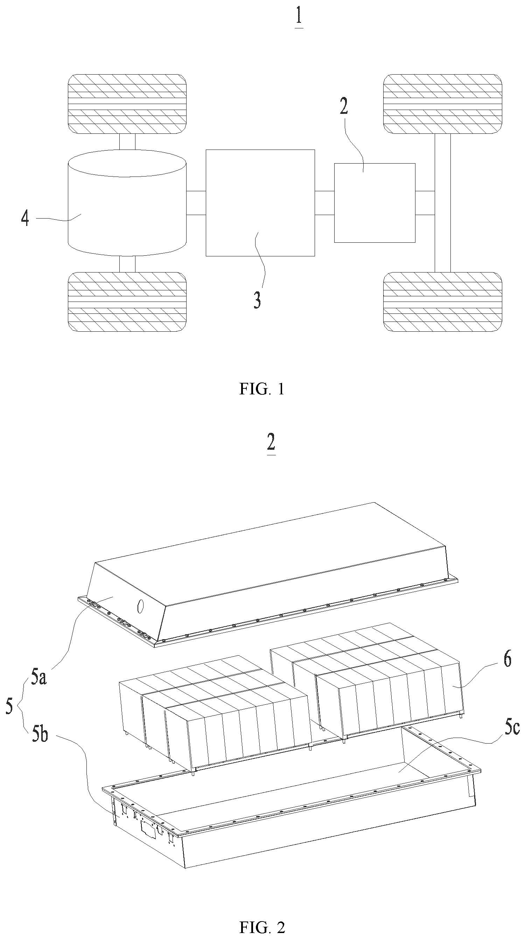

FIG. 1 is a schematic structural diagram of a vehicle provided in some embodiments of the present application.

As shown in FIG. 1, a battery 2 is disposed inside the vehicle 1, and the battery 2 may be disposed in the bottom, the front, or the rear of the vehicle 1. The battery 2 may be used for supplying power to the vehicle 1. For example, the battery 2 may be used as an operation power supply of the vehicle 1.

The vehicle 1 may further include a controller 3 and a motor 4. The controller 3 is used for controlling the battery 2 to supply power to the motor 4, for example, for a working power demand of the vehicle 1 during startup, navigation and running.

In some embodiments of the present application, the battery 2 may be used not only as an operation power supply of the vehicle 1, but also as a driving power supply of the vehicle 1 to replace or partially replace fuel or natural gas to provide driving power for the vehicle 1.

FIG. 2 is an exploded view of a battery provided in some embodiments of the present application.

As shown in FIG. 2, the battery 2 includes a box 5 and battery cells 6 (not shown), where the battery cells 6 are accommodated inside the box 5.

The box 5 is for accommodating the battery cells 6, and the box 5 may have various structures. In some embodiments, the box 5 may include a first box portion 5a and a second box portion 5b, the first box portion 5a fits on the second box portion 5b with each other, and the first box portion 5a and the second box portion 5b jointly define an accommodating space 5c for accommodating the battery cells 6. The second box portion 5b may be of a hollow structure with an open end, the first box portion 5a is of a plate-like structure, and the first box portion 5a fits on the open side of the second box portion 5b to form the box 5 with the accommodating space 5c. Alternatively, both the first box portion 5a and the second box portion 5b may be of hollow structures with one open side, and the open side of the first box portion 5a fits on the open side of the second box portion 5b to form the box 5 with the accommodating space 5c. The first box portion 5a and the second box portion 5b may be in various shapes, such as cylindrical or rectangular.

To improve the sealing performance after the first box portion 5a is connected to the second box portion 5b, a sealing member such as a sealant or a sealing ring may also be disposed between the first box portion 5a and the second box portion 5b.

Assuming that the first box portion 5a fits on top of the second box portion 5b, the first box portion 5a may be referred to as an upper box cover, and the second box portion 5b may be referred to as a lower box.

There may be one or more battery cells 6 in the battery 2. If there is a plurality of battery cells 6, the plurality of battery cells 6 may be connected in series, in parallel, or in series and parallel. The series and parallel connection refers to a combination of series connection and parallel connection in the plurality of battery cells 6. The plurality of battery cells 6 may be directly connected in series, in parallel, or in series and parallel together, and then the whole formed by the plurality of battery cells 6 is accommodated in the box 5. Alternatively, the plurality of battery cells 6 may be first connected in series, in parallel, or in series and parallel to form a battery module, then a plurality of battery modules are connected in series, in parallel, or in series and parallel to form a whole, and the whole is accommodated in the box 5.

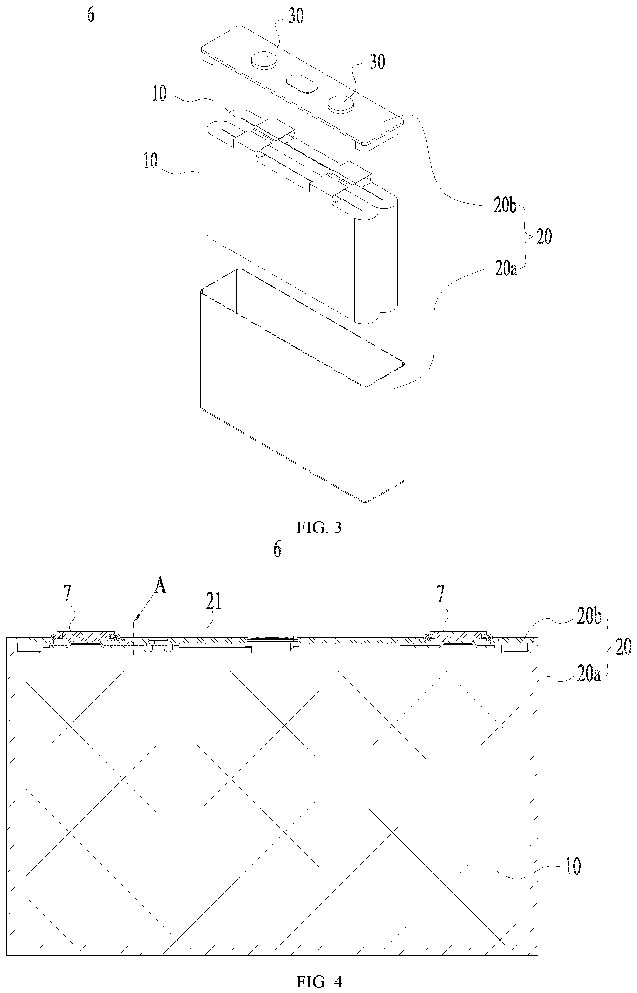

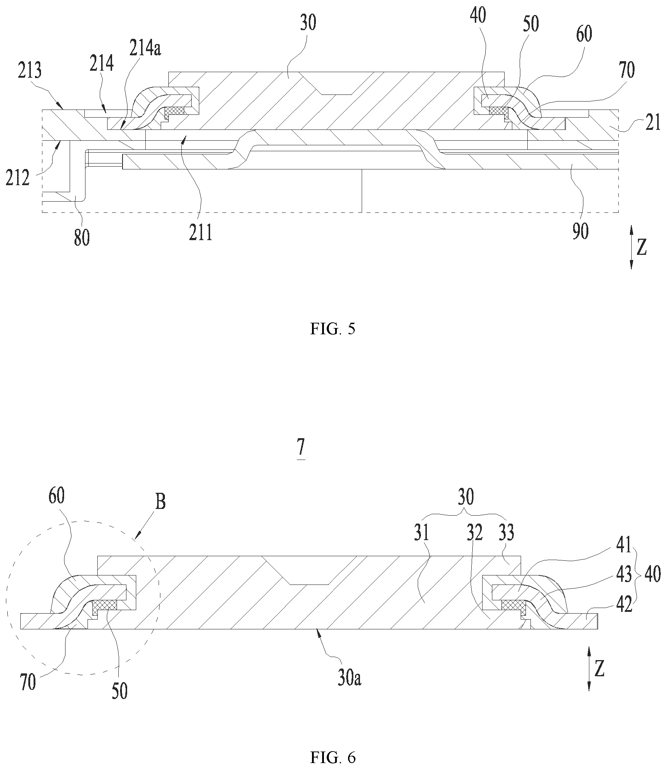

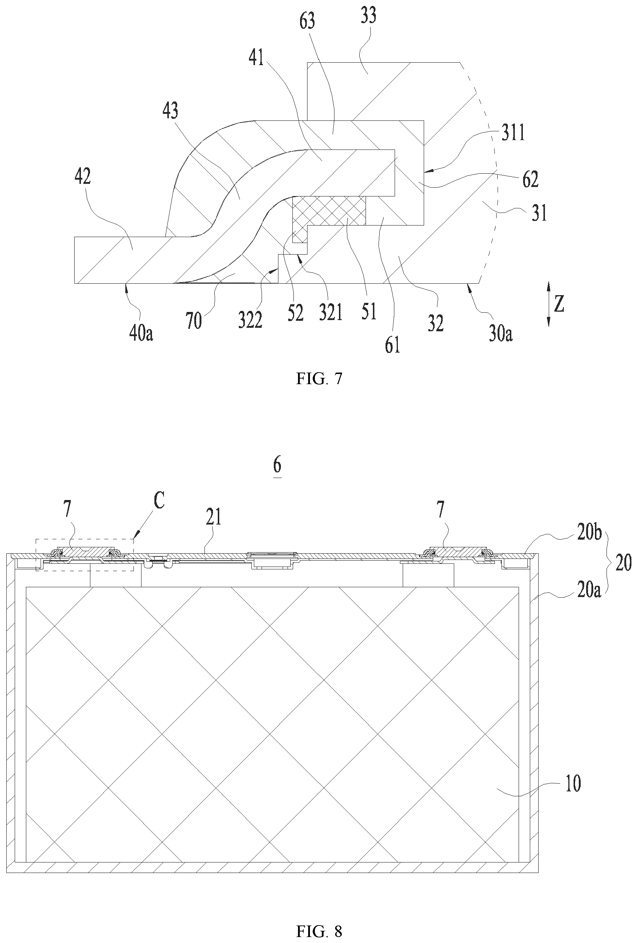

FIG. 3 is an exploded view of a battery cell provided in some embodiments of the present application; FIG. 4 is a cross-sectional view of the battery cell provided in some embodiments of the present application; FIG. 5 is an enlarged view of FIG. 4 at box A; FIG. 6 is a cross-sectional view of a terminal assembly of the battery cell provided in some embodiments of the present application; and FIG. 7 is an enlarged view of FIG. 6 at round box B.

With reference to FIGs. 3 to 7, the embodiments of the present application provide a battery cell 6, which includes a housing 20, an electrode assembly 10, an electrode terminal 30, a fixing member 40, and a sealing member 50. The housing 20 includes a first wall 21, and the first wall 21 is provided with an electrode lead-out hole 211. The electrode terminal 30 is electrically connected to the electrode assembly 10 and covers at least a portion of the electrode lead-out hole 211. The fixing member 40 surrounds the electrode terminal 30 and is used for connecting the electrode terminal 30 and the first wall 21. The sealing member 50 surrounds the electrode terminal 30, and at least a portion of the sealing member 50 is sandwiched between the electrode terminal 30 and the fixing member 40.

The housing 20 is of a hollow structure, and an accommodating space for accommodating the electrode assembly 10 and an electrolyte is formed therein. The shape of the housing 20 may be determined by the specific shape of the electrode assembly 10. For example, if the electrode assembly 10 is of a rectangular structure, a rectangular housing may be used; or if the electrode assembly 10 is of a cylindrical structure, a cylindrical housing may be used.

The material of the housing 20 may be various, for example, the material of the housing 20 may be metal or plastic. Optionally, the material of the housing 20 may be copper, iron, aluminum, steel, aluminum alloy, etc.

The first wall 21 is a wall of a certain thickness of the housing 20, which may be a top wall of the housing 20, a bottom wall of the housing 20, or a side wall of the housing 20, which is not limited in the embodiments of the present application.

The electrode lead-out hole 211 penetrates the first wall 21 to connect inner and outer spaces of the housing 20, thereby leading out electrical energy produced by the electrode assembly 10 to the outside of the housing 20. Optionally, the electrode lead-out hole 211 penetrates the first wall 21 in a thickness direction of the first wall 21.

One or more electrode assemblies 10 may be provided. When there is a plurality of electrode assemblies 10, which may be stacked. Exemplarily, as shown in FIG. 3, there are two electrode assemblies 10.

The electrode terminal 30 is used for electrically connecting the electrode assembly 10 to a circuit outside the battery cell 6, so as to achieve charging and discharging.

One or more electrode terminals 30 may be provided. In some examples, one electrode terminal 30 is provided, one of the electrode terminal 30 and the housing 20 is electrically connected to a positive electrode plate, the other is electrically connected to a negative electrode plate, and the electrode terminal 30 and the housing 20 serve as two output electrodes of the battery cell 6. In other examples, two electrode terminals 30 are provided, one electrode terminal 30 is electrically connected to the positive electrode plate, and the other electrode terminal 30 is electrically connected to the negative electrode plate.

In an axial direction Z of the electrode lead-out hole 211, the projection of the electrode terminal 30 at least partially overlaps the projection of the electrode lead-out hole 211. In some examples, in the axial direction Z of the electrode lead-out hole 211, the projection of the electrode terminal 30 is located within the projection of the electrode lead-out hole 211. In other examples, in the axial direction Z of the electrode lead-out hole 211, a portion of the projection of the electrode terminal 30 is located within the projection of the electrode lead-out hole 211, and the other portion is located outside the projection of the electrode lead-out hole 211.

In some examples, the electrode terminal 30 is entirely located on an outer side of the first wall 21 and covers at least a portion of the electrode lead-out hole 211 from the outer side. In other examples, the electrode terminal 30 is entirely located on an inner side of the first wall 21 and covers at least a portion of the electrode lead-out hole 211 from the inner side. In some other examples, a portion of the electrode terminal 30 is located on the outer side of the first wall 21, and another portion of the electrode terminal 30 is accommodated in the electrode lead-out hole 211.

The fixing member 40 is of a ring structure that encloses an accommodating space, and at least a portion of the electrode terminal 30 is accommodated in the accommodating space of the fixing member 40.

The manner of connection between the fixing member 40 and the electrode terminal 30 is not limited in the embodiments of the present application. Exemplarily, the fixing member 40 may be directly connected to the electrode terminal 30 or indirectly connected to the electrode terminal 30 through other components.

The manner of connection between the fixing member 40 and the first wall 21 is not limited in the embodiments of the present application. In some examples, the fixing member 40 is formed integrally with the first wall 21. In other examples, the fixing member 40 and the first wall 21 are formed separately and may be connected by bonding, snap connection, welding, or other means.

The sealing member 50 is sandwiched between the electrode terminal 30 and the fixing member 40 to seal the gap between the electrode terminal 30 and the fixing member 40. Exemplarily, the sealing member 50, the electrode terminal 30, and the fixing member 40 jointly seal the electrode lead-out hole 211.

The sealing member 50 may be of a ring structure. Exemplarily, the sealing member 50 may be sandwiched between the electrode terminal 30 and the fixing member 40 in a radial direction of the electrode terminal 30, or between the electrode terminal 30 and the fixing member 40 in an axial direction Z of the electrode terminal 30.

In the embodiments of the present application, the fixing member 40 is configured to connect the electrode terminal 30 and the first wall 21, and at least a portion of the sealing member 50 is sandwiched between the electrode terminal 30 and the fixing member 40, so as to achieve sealing, reduce the force acting on the first wall 21, reduce the deformation of the housing 20, and improve the reliability of the battery cell 6.

In some embodiments, the housing 20 includes a shell 20a and an end cover 20b, the shell 20a has an opening, and the end cover 20b fits on the opening.

The shell 20a is a component used for cooperating with the end cover 20b to form an internal cavity of the battery cell 6, and the formed internal cavity may be used for accommodating the electrode assembly 10, an electrolyte, and other components.

The shell 20a and the end cover 20b may be separate components. Exemplarily, an opening may be provided on the shell 20a, and the end cover 20b fits on the opening to form the internal cavity of the battery cell 6.

The shell 20a may have various shapes and sizes, such as rectangular, cylindrical, or hexagonal prism. Specifically, the shape of the shell 20a may be determined by the specific shape and size of the electrode assembly 10. The material of the shell 20a may be various, such as copper, iron, aluminum, stainless steel, or aluminum alloy, which is not specially limited in the embodiments of the present application.

The shape of the end cover 20b may be adapted to the shape of the shell 20a to fit the shell 20a. Optionally, the end cover 20b may be made of a material having some hardness and strength (such as aluminum alloy). In this case, the end cover 20b is less prone to deformation when subjected to squeezing and collision, so that the battery cell 6 can have higher structural strength and its reliability can also be improved.

The end cover 20b is connected to the shell 20a by welding, bonding, snap connection, or other means.

In some examples, the shell 20a may be of a structure with one open side, and one end cover 20b is provided to fit on the shell 20a. In other examples, the shell 20a may be of a structure with two open sides, and two end covers 20b are provided to fit on two openings of the shell 20a respectively.

In some examples, the end cover 20b may be the first wall 21. In another example, one wall of the shell 20a may be the end cover 20b, for example, the bottom wall, opposite to the end cover 20b, of the shell 20a may be the first wall 21.

In some embodiments, the end cover 20b is the first wall 21. The end cover 20b can be of a plate-like structure, and components such as the electrode terminal 30 and the fixing member 40 are easily mounted to the end cover 20b.

In some embodiments, in a plane parallel to the axial direction Z of the electrode lead-out hole 211, the orthographic projection of the electrode terminal 30 covers the orthographic projection of the sealing member 50.

In the axial direction Z, the sealing member 50 and the electrode terminal 30 share partial space, which can reduce the size of the electrode terminal 30 protruding to the outer side of the first wall 21, improve space utilization, and increase the energy density of the battery cell 6.

In some embodiments, the electrode terminal 30 includes a terminal body 31 and a first flange 32 protruding from an outer circumferential surface 311 of the terminal body, and the sealing member 50 surrounds the terminal body 31. In the axial direction Z of the electrode lead-out hole 211, at least a portion of the sealing member 50 is sandwiched between the first flange 32 and the fixing member 40.

There may be one or more first flanges 32. In some examples, there is one first flange 32, and the first flange 32 surrounds the terminal body 31 by one circle. In other examples, there is a plurality of first flanges 32, and the first flanges 32 are spaced apart in a circumferential direction of the terminal body 31.

In some examples, in the axial direction Z of the electrode lead-out hole 211, the projection of the first flange 32 is located within the projection of the electrode lead-out hole 211. In other examples, in the axial direction Z of the electrode lead-out hole 211, a portion of the projection of the first flange 32 is located within the projection of the electrode lead-out hole 211, and the other portion is located outside the projection of the electrode lead-out hole 211.

The first flange 32 may be located on the inner side of the electrode lead-out hole 211 or on the outer side of the electrode lead-out hole 211. Alternatively, the first flange 32 may be accommodated within the electrode lead-out hole 211.

In the axial direction Z of the electrode lead-out hole 211, the sealing member 50 may be partially sandwiched between the first flange 32 and the fixing member 40, or entirely sandwiched between the first flange 32 and the fixing member 40.

By configuring the first flange 32, the electrode terminal 30 and the fixing member 40 can overlap in the axial direction Z of the electrode lead-out hole 211, so that the first flange 32 and the fixing member 40 can clamp the sealing member 50 in the axial direction Z of the electrode lead-out hole 211. The way in which the first flange 32 and the fixing member 40 clamp the sealing member 50 in the axial direction Z of the electrode lead-out hole 211 is easy to implement and facilitates assembly.

In some embodiments, the electrode terminal 30 further includes a second flange 33, and the second flange 33 protrudes from the outer circumferential surface 311 of the terminal body. The first flange 32 and the second flange 33 are spaced apart in the axial direction Z, and at least a portion of the fixing member 40 is located between the first flange 32 and the second flange 33.

In some examples, the first flange 32 may be located at the side of the second flange 33 close to the electrode assembly 10. In other examples, the first flange 32 may be located at the side of the second flange 33 away from the electrode assembly 10.

There may be one or more second flanges 33. In some examples, there is one second flange 33, and the second flange 33 surrounds the terminal body 31 by one circle. In other examples, there is a plurality of second flanges 33, and the second flanges 33 are spaced apart in the circumferential direction of the terminal body 31.

The first flange 32 and the second flange 33 can limit the fixing member 40 from two sides of the fixing member 40, thereby achieving the connection between the fixing member 40 and the electrode terminal 30. When the first flange 32 and the fixing member 40 compress the sealing member in the axial direction Z, the reaction force applied by the sealing member to the fixing member 40 is substantially transmitted in the axial direction Z to the second flange 33. That is, the reaction force produced by the sealing member is substantially transmitted to the first flange 32 and the second flange 33, thereby reducing the force acting on the first wall 21 and thus the deformation of the housing 20, and improving the reliability of the battery cell 6.

In some embodiments, in the axial direction Z of the electrode lead-out hole 211, the second flange 33 is located at the side of the first flange 32 away from the electrode assembly 10.

The portion of the sealing member 50 sandwiched between the first flange 32 and the fixing member 40 is located on an inner side of the second flange 33, which can reduce the risk of exposure of the sealing member 50 and retard the aging of the sealing member 50.

In some embodiments, the battery cell 6 further includes a first insulating member 60. In the axial direction Z of the electrode lead-out hole 211, at least a portion of the first insulating member 60 is located between the second flange 33 and the fixing member 40.

The first insulating member 60 can insulate and isolate the second flange 33 from the fixing member 40 to reduce the risk of conductivity between the electrode terminal 30 and the fixing member 40.

In some embodiments, the sealing member 50 includes a sealing body 51 and a first protrusion 52, the sealing body 51 surrounds the terminal body 31, and the first protrusion 52 protrudes from the surface of the sealing body 51 facing the first flange 32. In the axial direction Z of the electrode lead-out hole 211, at least a portion of the sealing body 51 is sandwiched between the first flange 32 and the fixing member 40. At least a portion of the first flange 32 is located between the first protrusion 52 and the terminal body 31.

There may be one or more first protrusions 52. In some examples, there is one first protrusion 52, and the first protrusion 52 surrounds the first flange 32. In another example, there is a plurality of first protrusions 52, and the first protrusions 52 are spaced apart in the circumferential direction of the terminal body 31.

Exemplarily, at least a portion of the first flange 32 is located between the first protrusion 52 and the terminal body 31 in the radial direction of the electrode terminal 30.

The portion of the sealing body 51 sandwiched between the first flange 32 and the fixing member 40 can be compressed by force to achieve sealing between the electrode terminal 30 and the fixing member 40. When the electrode terminal 30 and the sealing member 50 are assembled, the first protrusion 52 can cooperate with the first flange 32 to position the sealing member 50 in the radial direction of the electrode terminal 30, thereby improving assembly efficiency and accuracy.

In some embodiments, the first flange 32 is provided with a first recessed portion 321, and the first recessed portion 321 is recessed relative to the surface of the first flange 32 facing the sealing body 51. The first protrusion 52 is accommodated in the first recessed portion 321.

The first recessed portion 321 can provide avoidance space for the first protrusion 52, to reduce the risk of interference between the first protrusion 52 and the first flange 32. In addition, by forming the first recessed portion 321, the first flange 32 and the first protrusion 52 can share space in the radial direction of the electrode terminal 30 to improve space utilization.

In some embodiments, in the axial direction Z of the electrode lead-out hole 211, the projection of the first flange 32 is located within the projection of the electrode lead-out hole 211.

In the axial direction Z, the first flange 32 does not overlap the first wall 21, which can increase the creepage distance between the first flange 32 and the first wall 21, improve the insulation between the first flange 32 and the first wall 21, eliminate an insulation structure between the first flange 32 and the first wall 21, reduce the overall weight, and increase energy density.

Exemplarily, when the size of the electrode terminal 30 is constant, in the present application, the diameter of the electrode lead-out hole 211 can be increased to ensure that the projection of the first flange 32 in the axial direction Z is located within the projection of the electrode lead-out hole 211 in the axial direction Z. Increasing the diameter of the electrode lead-out hole 211 can reduce the overall weight of the housing 20.

In some embodiments, in the axial direction Z of the electrode lead-out hole 211, the projection of the electrode terminal 30 is located within the projection of the electrode lead-out hole 211.

In some embodiments, the battery cell 6 further includes a second insulating member 70, and the second insulating member 70 is at least used for separating the first flange 32 from the fixing member 40.

Exemplarily, the fixing member 40 may be made of a metal material having higher strength.

The second insulating member 70 can insulate and isolate the first flange 32 from the fixing member 40 to reduce the risk of conductivity between the electrode terminal 30 and the fixing member 40.

In some embodiments, in the axial direction Z of the electrode lead-out hole 211, at least a portion of the second insulating member 70 is disposed between the fixing member 40 and the first flange 32.

The fixing member 40 and the first flange 32 can limit the second insulating member 70 from two sides, thereby reducing the risk of detachment of the second insulating member 70 and improving insulation performance.

In some embodiments, in the axial direction Z of the electrode lead-out hole 211, at least a portion of the second insulating member 70 is disposed between the fixing member 40 and a bottom surface of the first recessed portion 321.

In some embodiments, the first wall 21 has a first surface 212 facing the electrode assembly 10 and a second surface 213 away from the electrode assembly 10. In a direction facing the electrode assembly 10, the electrode terminal 30 does not extend beyond the first surface 212.

In the present application, the size of the electrode terminal 30 extending into the housing 20 can be reduced, and the internal space of the housing 20 occupied by the electrode terminal 30 can be reduced, thereby reserving more space for an electrolyte to improve the cycle life and cycle performance of the battery cell 6.

In some embodiments, both the first surface 212 and the second surface 213 are planes. Optionally, the first surface 212 is parallel to the second surface 213.

In some embodiments, the battery cell 6 further includes an insulating plastic 80, and the insulating plastic 80 is attached to the first surface 212.

In some embodiments, the first wall 21 and the fixing member 40 are separate ones.

The first wall 21 and the fixing member 40 may be connected by welding, bonding, riveting, or other means.

Separating the first wall 21 and the fixing member 40 can simplify forming processes for the first wall 21 and the fixing member 40, reduce the risk of interference of the first wall 21 to the assembly of the fixing member 40 with the electrode terminal 30, and reduce assembly difficulty.

In some embodiments, the first wall 21 has a first surface 212 facing the electrode assembly 10 and a second surface 213 away from the electrode assembly 10. The first wall 21 is provided with a third recessed portion 214 recessed relative to the second surface 213, and the electrode lead-out hole 211 is disposed on a bottom surface 214a of the third recessed portion. At least a portion of the fixing member 40 is accommodated in the third recessed portion 214.

Exemplarily, the electrode lead-out hole 211 penetrates the portion of the first wall 21 located between the bottom surface 214a of the third recessed portion and the first surface 212. That is, two ends of the electrode lead-out hole 211 form openings on the bottom surface 214a of the third recessed portion and the first surface 212, respectively.

The third recessed portion 214 may be a cylindrical recessed portion, a conical recessed portion, a stepped recessed portion, or a recessed portion in other shapes.

By forming the third recessed portion 214, the size of the fixing member 40 protruding to the outer side of the first wall 21 can be reduced, thereby reducing the external dimensions of the battery cell 6 and increasing the energy density of the battery cell 6. The third recessed portion 214 can further position the fixing member 40 to simplify the process of connection between the fixing member 40 and the first wall 21.

In some embodiments, the third recessed portion 214 is a stepped recessed portion.

In some embodiments, the fixing member 40 has a connecting surface 40a, and the connecting surface 40a abuts against the bottom surface 214a of the third recessed portion in the axial direction Z of the electrode lead-out hole 211. The connecting surface 40a is flush with an end surface 30a of the electrode terminal 30 facing the electrode assembly 10.

Exemplarily, the fixing member 40 and the first wall 21 are arranged in the axial direction Z of the electrode lead-out hole 211.

The connecting surface 40a is flush with the end surface 30a of the electrode terminal 30 facing the electrode assembly 10, which can reduce the size of the electrode terminal 30 extending into the electrode lead-out hole 211 and reduce the internal space of the housing 20 occupied by the electrode terminal 30.

In some embodiments, the connecting surface 40a, the end surface 30a of the electrode terminal 30 facing the electrode assembly 10, and the surface of the second insulating member 70 facing the electrode assembly 10 are flush with one another.

In some embodiments, the fixing member 40 is disposed at the side of the first wall 21 away from the electrode assembly 10.

In the embodiments of the present application, the whole fixing member 40 is not required to protrude from the second surface 213, but only a portion of the fixing member 40 may protrude from the second surface 213.

In the embodiments of the present application, the fixing member 40 is disposed at the side of the first wall 21 away from the electrode assembly 10, which can reduce the internal space of the housing 20 occupied by the fixing member 40.

In some embodiments, the fixing member 40 includes a first connecting portion 41, a second connecting portion 42, and a bent portion 43; at least a portion of the electrode terminal 30 is located at the side of the first connecting portion 41 facing the electrode assembly 10 and clamps the sealing member 50 together with the first connecting portion 41. The bent portion 43 surrounds the outer circumferential surface of the first connecting portion 41 and bends towards the first wall 21. The second connecting portion 42 surrounds the bent portion 43 and is connected to the first wall 21.

By bending the fixing member 40, the distance between the electrode assembly 10 and the first connecting portion 41 can be increased, so that the sealing member 50 and the electrode terminal 30 can be disposed at the side of the first connecting portion 41 facing the electrode assembly 10, thereby reducing the internal space of the housing 20 occupied by the electrode terminal 30.

Compared to the solution that the sealing member 50 is sandwiched between the first wall 21 and the first flange 32, the sealing member 50 is disposed between the first flange 32 and the first connecting portion 41 in the embodiments of the present application, so that the sealing member 50 and the electrode terminal 30 can share space in the axial direction Z, thereby reducing the size of the electrode terminal 30 protruding from the second surface 213 of the first wall 21 and increasing energy density.

In some embodiments, the first connecting portion 41 encloses a through hole, and the terminal body 31 passes through the through hole.

In some embodiments, the second connecting portion 42 is accommodated in the third recessed portion 214.

In some embodiments, the second connecting portion 42 includes a connecting surface 40a abutting against the bottom surface 214a of the third recessed portion.

In some embodiments, the first insulating member 60 includes a first insulating portion 61, a second insulating portion 62, and a third insulating portion 63, where the first insulating portion 61 is sandwiched between the first flange 32 and the first connecting portion 41 in the axial direction Z, and at least a portion of the third insulating portion 63 is sandwiched between the second flange 33 and the first connecting portion 41 in the axial direction Z. The second insulating portion 62 connects the first insulating portion 61 with the third insulating portion 63, and separates the terminal body 31 from the first connecting portion 41.

The first connecting portion 41 and the first flange 32 clamp the first insulating portion 61, thereby reducing the risk of the first insulating member 60 being separated from the electrode terminal 30.

Optionally, the third insulating portion 63 covers an outer surface of the first connecting portion 41 and an outer surface of the bent portion 43.

In some embodiments, the material of the first insulating member 60 and the material of the second insulating member 70 are both plastic.

In some embodiments, the battery cell 6 includes a terminal assembly 7, and the terminal assembly 7 includes an electrode terminal 30, a fixing member 40, a sealing member 50, a first insulating member 60, and a second insulating member 70.

Exemplarily, the terminal assembly 7 may be assembled as follows: providing the electrode terminal 30, where the second flange 33 of the electrode terminal 30 is not formed; sleeving the sealing member 50 over the terminal body 31 to place onto the first flange 32; mounting the fixing member 40, and allowing the electrode terminal 30 to pass through the fixing member 40, where the first connecting portion 41 of the fixing member 40 and the first flange 32 squeeze the sealing member 50 to ensure that the compression amount of the sealing member 50 meets requirements; forming the first insulating member 60 and the second insulating member 70 by injection molding; squeezing the electrode terminal 30 and forming the second flange 33 to rivet the electrode terminal 30 onto the fixing member 40.

The second flange 33 can limit the third insulating portion 63 to reduce the risk of warping of the third insulating portion 63.

In some embodiments, the battery cell 6 further includes an adapter 90, and the adapter 90 is used for electrically connecting the electrode terminal 30 with the lug of the electrode assembly 10.

In some embodiments, the adapter 90 abuts against and is connected to the end surface 30a of the electrode terminal 30.

In some embodiments, a portion of the adapter 90 is accommodated in the electrode lead-out hole 211.

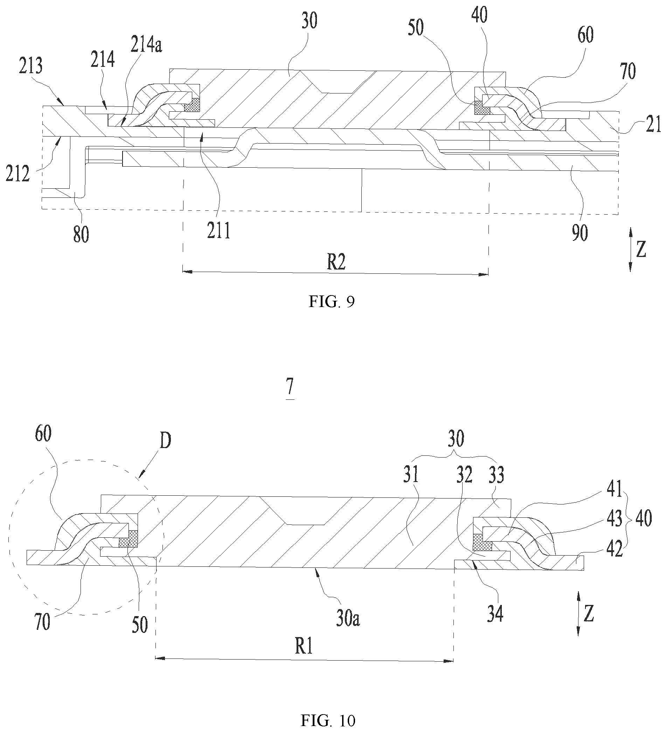

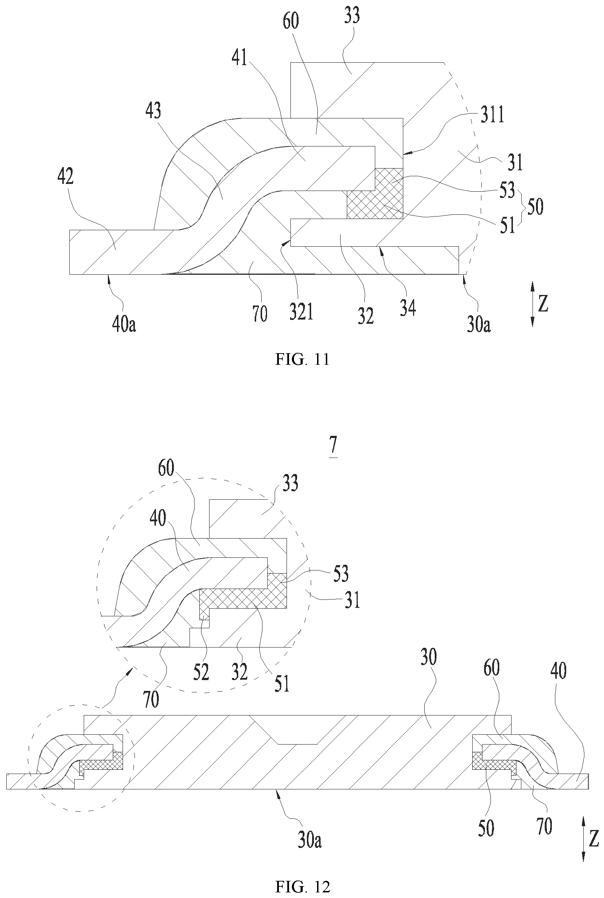

FIG. 8 is a cross-sectional view of a battery cell provided in other embodiments of the present application; FIG. 9 is an enlarged view of FIG. 8 at box C; FIG. 10 is a cross-sectional view of a terminal assembly of the battery cell provided in other embodiments of the present application; and FIG. 11 is an enlarged view of FIG. 10 at round box D.

With reference to FIGs. 8 to 11, in some embodiments, the sealing member 50 includes a sealing body 51 and a second protrusion 53, the sealing body 51 surrounds the terminal body 31, and the second protrusion 53 protrudes from the surface of the sealing body 51 away from the first flange 32. In the axial direction Z of the electrode lead-out hole 211, at least a portion of the sealing body 51 is sandwiched between the first flange 32 and the fixing member 40. The second protrusion 53 is disposed between the fixing member 40 and the terminal body 31.

There may be one or more second protrusions 53. In some examples, there is one second protrusion 53, and the second protrusion 53 surrounds the terminal body 31. In another example, there is a plurality of second protrusions 53, and the second protrusions 53 are spaced apart in the circumferential direction of the terminal body 31.

The second protrusion 53 is disposed between the fixing member 40 and the terminal body 31 in the radial direction of the electrode terminal 30.

The portion of the sealing body 51 sandwiched between the first flange 32 and the fixing member 40 can be compressed by force to achieve sealing between the electrode terminal 30 and the fixing member 40. During assembly, the second protrusion 53 can position the fixing member 40 to improve assembly efficiency and accuracy.

In some embodiments, the second protrusion 53 is sandwiched between the fixing member 40 and the terminal body 31 in the radial direction of the electrode terminal 30. The second protrusion 53 is compressed by force, which can improve the sealing performance.

In some embodiments, in the axial direction Z of the electrode lead-out hole 211, the projection of the first flange 32 at least partially overlaps the projection of the first wall 21. The battery cell 6 further includes a second insulating member 70, and the second insulating member 70 is at least used for separating the first flange 32 from the first wall 21.

The first wall 21 can provide support for the first flange 32, which can increase the force bearing capacity of the electrode terminal 30 in the axial direction Z, making the electrode terminal 30 more stable. The second insulating member 70 can separate the first flange 32 from the first wall 21 to reduce the risk of conductivity between the first flange 32 and the first wall 21 and improve insulation performance.

In some embodiments, the electrode terminal 30 has an end surface 30a facing the electrode assembly 10, and the electrode terminal 30 is provided with a second recessed portion 34 recessed relative to the end surface 30a and surrounding the end surface 30a. The second recessed portion 34 extends to an outer circumferential surface 322 of the first flange in the radial direction of the electrode terminal 30. The portion of the second insulating member 70 accommodated in the second recessed portion 34 separates the first flange 32 from the first wall 21.

In the axial direction Z of the electrode lead-out hole 211, the end surface 30a of the electrode terminal 30 is the surface of the electrode terminal 30 closest to the electrode assembly 10. Exemplarily, the end surface 30a is a plane.

By forming the second recessed portion 34, the second insulating member 70 and the electrode terminal 30 can share more space in the axial direction Z, the size of the electrode terminal 30 protruding from the first wall 21 can be reduced, and space utilization can be improved. In addition, by forming the second recessed portion 34, the distance between the electrode terminal 30 and the first wall 21 can be increased to reduce the risk of conductivity between the electrode terminal 30 and the first wall 21.

By forming the second recessed portion 34, the overall weight of the terminal assembly 7 can further be reduced.

In some embodiments, the inner diameter R1 of the second recessed portion 34 is less than the inner diameter R2 of the electrode lead-out hole 211.

In the embodiments of the present application, the end surface 30a of the electrode terminal 30 can have a relatively small size, thereby reducing the risk of overlap of the end surface 30a with the first wall 21 in the axial direction Z, and reducing the risk of conductivity between the end surface 30a and the first wall 21.

In some embodiments, the projection of the end surface 30a of the electrode terminal 30 in the axial direction Z is located within the projection of the electrode lead-out hole 211 in the axial direction Z.

In some embodiments, the cross-section of the second insulating member 70 may be C-shaped, and the C-shaped structure covers the edge of the first flange 32, which can improve insulation performance and reduce the risk of falling of the second insulating member 70 from the electrode terminal 30.

FIG. 12 is a cross-sectional view of a terminal assembly of a battery cell provided in some other embodiments of the present application.

As shown in FIG. 12, in some embodiments, the sealing member 50 may include a sealing body 51, a first protrusion 52, and a second protrusion 53. The sealing body 51 surrounds the terminal body 31, and the first protrusion 52 protrudes from the surface of the sealing body 51 facing the first flange 32. In the axial direction Z of the electrode lead-out hole 211, at least a portion of the sealing body 51 is sandwiched between the first flange 32 and the fixing member 40. At least a portion of the first flange 32 is located between the first protrusion 52 and the terminal body 31. The second protrusion 53 protrudes from the surface of the sealing body 51 away from the first flange 32, and the second protrusion 53 is disposed between the fixing member 40 and the terminal body 31.

In the embodiments of the present application, the sealing performance can be improved.

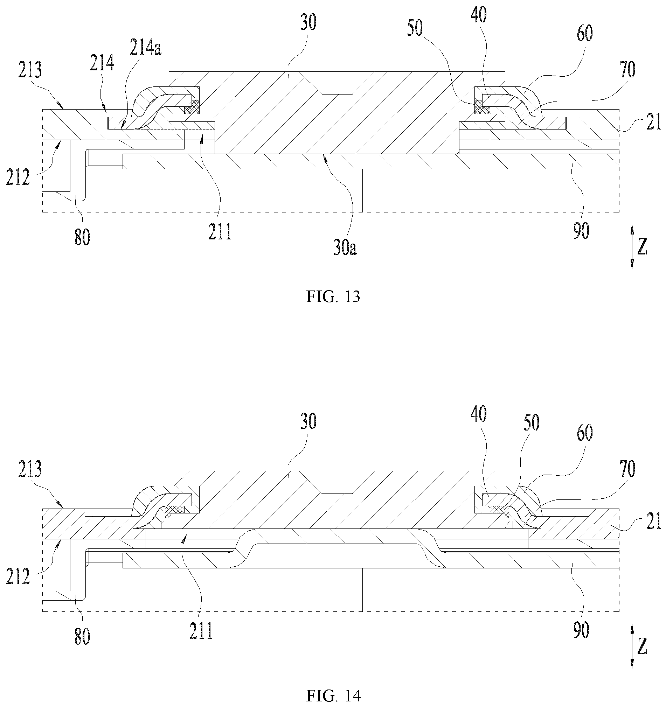

FIG. 13 is a partial cross-sectional view of a battery cell provided in some other embodiments of the present application.

As shown in FIG. 13, in some embodiments, a portion of the electrode terminal 30 may be accommodated in the electrode lead-out hole 211.

In some embodiments, the electrode terminal 30 may extend beyond the first surface 212 of the first wall 21 in a direction close to the electrode assembly 10.

In the embodiments of the present application, the electrode assembly 10 may extend into the interior of the housing 20, which can simplify the structure of the adapter 90.

FIG. 14 is a partial cross-sectional view of a battery cell provided in some more embodiments of the present application.

As shown in FIG. 14, in some embodiments, the fixing member 40 is formed integrally with the first wall 21.

Integrating the fixing member 40 with the first wall 21 can improve the strength of connection between the first wall 21 and the fixing member 40 and omitting the process for connecting the first wall 21 with the fixing member 40.

According to some embodiments of the present application, a battery is further provided in the present application, including a plurality of battery cells in any of the above embodiments.

According to some embodiments of the present application, an electrical apparatus is further provided in the present application, including the battery cell in any of the above embodiments, where the battery cell is used for providing electrical energy to the electrical apparatus. The electrical apparatus may be any of the aforementioned devices or systems using battery cells.

Referring to FIGs. 4 to 7, an embodiment of the present application provides a battery cell 6, which includes a housing 20, an electrode assembly 10, an electrode terminal 30, a fixing member 40, a sealing member 50, a first insulating member 60, and a second insulating member 70. The housing 20 includes a shell 20a and an end cover 20b, the shell 20a has an opening, and the end cover 20b fits on the opening. The end cover 20b is provided with an electrode lead-out hole 211.

The electrode terminal 30 is electrically connected to the electrode assembly 10 and covers at least a portion of the electrode lead-out hole 211. The fixing member 40 surrounds the electrode terminal 30 and is used for connecting the electrode terminal 30 and the end cover 20b.

In an axial direction Z of the electrode lead-out hole 211, the projection of the electrode terminal 30 is located within the projection of the electrode lead-out hole 211. The end cover 20b has a first surface 212 facing the electrode assembly 10 and a second surface 213 away from the electrode assembly 10. In a direction facing the electrode assembly 10, the electrode terminal 30 does not extend beyond the first surface 212.

The electrode terminal 30 includes a terminal body 31, a first flange 32, and a second flange 33, where the first flange 32 and the second flange 33 both protrude from an outer circumferential surface 311 of the terminal body. In the axial direction Z of the electrode lead-out hole 211, at least a portion of the fixing member 40 is located between the first flange 32 and the second flange 33.

The sealing member 50 surrounds the terminal body 31. In the axial direction Z of the electrode lead-out hole 211, at least a portion of the sealing member 50 is sandwiched between the first flange 32 and the fixing member 40. In the axial direction Z of the electrode lead-out hole 211, the first insulating member 60 is at least used for separating the second flange 33 from the fixing member 40. The second insulating member 70 is at least used for separating the first flange 32 from the fixing member 40.

Referring to FIGs. 8 to 11, another embodiment of the present application provides a battery cell 6, which includes a housing 20, an electrode assembly 10, an electrode terminal 30, a fixing member 40, a sealing member 50, a first insulating member 60, and a second insulating member 70. The housing 20 includes a shell 20a and an end cover 20b, the shell 20a has an opening, and the end cover 20b fits on the opening. The end cover 20b is provided with an electrode lead-out hole 211.

The electrode terminal 30 is electrically connected to the electrode assembly 10 and covers at least a portion of the electrode lead-out hole 211. The fixing member 40 surrounds the electrode terminal 30 and is used for connecting the electrode terminal 30 and the end cover 20b.

The end cover 20b has a first surface 212 facing the electrode assembly 10 and a second surface 213 away from the electrode assembly 10. In a direction facing the electrode assembly 10, the electrode terminal 30 does not extend beyond the first surface 212.

The electrode terminal 30 includes a terminal body 31, a first flange 32, and a second flange 33, where the first flange 32 and the second flange 33 both protrude from an outer circumferential surface 311 of the terminal body. In the axial direction Z of the electrode lead-out hole 211, at least a portion of the fixing member 40 is located between the first flange 32 and the second flange 33. The first insulating member 60 is at least used for separating the second flange 33 from the fixing member 40.

The sealing member 50 surrounds the terminal body 31. In the axial direction Z of the electrode lead-out hole 211, at least a portion of the sealing member 50 is sandwiched between the first flange 32 and the fixing member 40.

In the axial direction Z of the electrode lead-out hole 211, the projection of the first flange 32 at least partially overlaps the projection of the first wall 21. The second insulating member 70 is at least used for separating the first flange 32 from the first wall 21.

The electrode terminal 30 has an end surface 30a facing the electrode assembly 10, and the electrode terminal 30 is provided with a second recessed portion 34 recessed relative to the end surface 30a and surrounding the end surface 30a. The second recessed portion 34 extends to an outer circumferential surface 322 of the first flange in the radial direction of the electrode terminal 30. The portion of the second insulating member 70 accommodated in the second recessed portion 34 separates the first flange 32 from the first wall 21.

It should be noted that the embodiments in the present application and the features in the embodiments may be combined one another on a non-conflict basis.

In conclusion, it should be noted that the above embodiments are merely used for explaining the technical solutions of the present application, but not for limiting the present application. Although the present application is described in detail with reference to the foregoing embodiments, those skilled in the art should understand that they can still make modifications to the technical solutions described in the foregoing embodiments or make equivalent replacements to some technical features thereof, but these modifications or replacements do not make the essences of the corresponding technical solutions depart from the gist and scope of the technical solutions of the embodiments of the present application.

## Claims

1. A battery cell, comprising:
a housing comprising a first wall, the first wall being provided with an electrode lead-out hole;
an electrode assembly accommodated in the housing;
an electrode terminal electrically connected to the electrode assembly and covering at least a portion of the electrode lead-out hole;
a fixing member surrounding the electrode terminal and connecting the electrode terminal and the first wall; and
a sealing member surrounding the electrode terminal, at least a portion of the sealing member being sandwiched between the electrode terminal and the fixing member.

2. The battery cell according to claim 1, wherein the electrode terminal comprises a terminal body and a first flange protruding from an outer circumferential surface of the terminal body, and the sealing member surrounds the terminal body; and
in an axial direction of the electrode lead-out hole, at least a portion of the sealing member is sandwiched between the first flange and the fixing member.

3. The battery cell according to claim 2, wherein the electrode terminal further comprises a second flange protruding from the outer circumferential surface of the terminal body; and
the first flange and the second flange are spaced apart in the axial direction, and at least a portion of the fixing member is located between the first flange and the second flange,.

4. The battery cell according to claim 3, wherein in the axial direction of the electrode lead-out hole, the second flange is located at a side of the first flange away from the electrode assembly.

5. The battery cell according to claim 3 or 4, further comprising a first insulating member, wherein in the axial direction of the electrode lead-out hole, at least a portion of the first insulating member is located between the second flange and the fixing member.

6. The battery cell according to any one of claims 2-5, wherein the sealing member comprises a sealing body and a first protrusion, the sealing body surrounds the terminal body, and the first protrusion protrudes from a surface of the sealing body facing the first flange;
in the axial direction of the electrode lead-out hole, at least a portion of the sealing body is sandwiched between the first flange and the fixing member; and
at least a portion of the first flange is located between the first protrusion and the terminal body,.

7. The battery cell according to claim 6, wherein the first flange is provided with a first recessed portion, and the first recessed portion is recessed relative to a surface of the first flange facing the sealing body; and
the first protrusion is accommodated in the first recessed portion.

8. The battery cell according to any one of claims 2-7, wherein the sealing member comprises a sealing body and a second protrusion, the sealing body surrounds the terminal body, and the second protrusion protrudes from a surface of the sealing body away from the first flange;
in the axial direction of the electrode lead-out hole, at least a portion of the sealing body is sandwiched between the first flange and the fixing member; and
the second protrusion is located between the fixing member and the terminal body.

9. The battery cell according to any one of claims 2-8, wherein in the axial direction of the electrode lead-out hole, a projection of the first flange is located within a projection of the electrode lead-out hole.

10. The battery cell according to any one of claims 2-8, wherein in the axial direction of the electrode lead-out hole, a projection of the first flange and a projection of the first wall at least partially overlap; and
the battery cell further comprises a second insulating member at least for separating the first flange from the first wall.

11. The battery cell according to any one of claims 2-10, wherein the battery cell further comprises a second insulating member at least for separating the first flange from the fixing member, .

12. The battery cell according to claim 11, wherein in the axial direction of the electrode lead-out hole, at least a portion of the second insulating member is disposed between the fixing member and the first flange,.

13. The battery cell according to claim 11 or 12, wherein the electrode terminal has an end surface facing the electrode assembly, and the electrode terminal is provided with a second recessed portion recessed relative to the end surface and surrounding the end surface;
the second recessed portion extends to an outer circumferential surface of the first flange in a radial direction of the electrode terminal; and
a portion of the second insulating member accommodated in the second recessed portion separates the first flange from the first wall,.

14. The battery cell according to claim 13, wherein an inner diameter of the second recessed portion is less than that of the electrode lead-out hole.

15. The battery cell according to any one of claims 1-14, wherein the first wall has a first surface facing the electrode assembly and a second surface away from the electrode assembly; and
in a direction facing the electrode assembly, the electrode terminaldoes not extend beyond the first surface.

16. The battery cell according to any one of claims 1-15, wherein the first wall and the fixing member are separate ones.

17. The battery cell according to claim 16, wherein
the first wall has the first surface facing the electrode assembly and the second surface away from the electrode assembly;
the first wall is provided with a third recessed portion recessed relative to the second surface, and the electrode lead-out hole is disposed on a bottom surface of the third recessed portion; and
at least a portion of the fixing member is accommodated in the third recessed portion,.

18. The battery cell according to claim 17, wherein the fixing member has a connecting surface, and the connecting surface abuts against the bottom surface of the third recessed portion in the axial direction of the electrode lead-out hole; and
the connecting surface is flush with an end surface of the electrode terminalfacing the electrode assembly,.

19. The battery cell according to any one of claims 1-18, wherein the fixing member is disposed on a side of the first wall away from the electrode assembly,.

20. The battery cell according to claim 19, wherein the fixing member comprises a first connecting portion, a second connecting portion, and a bent portion; at least a portion of the electrode terminal is located at a side of the first connecting portion facing the electrode assembly and clamps the sealing member together with the first connecting portion; and
the bent portion surrounds an outer circumferential surface of the first connecting portion and bends towards the first wall, and the second connecting portion surrounds the bent portion and is connected to the first wall.

21. The battery cell according to any one of claims 1-15, wherein the fixing member is formed integrally with the first wall,.

22. The battery cell according to any one of claims 1-21, wherein the housing comprises a shell and an end cover, the shell has an opening, and the end cover fits on the opening; and
the end cover is the first wall,.

23. The battery cell according to any one of claims 1-22, wherein in a plane parallel to the axial direction of the electrode lead-out hole, an orthographic projection of the electrode terminal covers an orthographic projection of the sealing member.

24. A battery, comprising a plurality of the battery cells according to any one of claims 1-23.

25. An electrical apparatus, comprising the battery cell according to any one of claims 1-23, wherein the battery cell is configured for providing electrical energy.
